# EUROPEAN PATENT APPLICATION

(11) **EP 1 324 542 A1**
(43) Date of publication of application: **02.07.2003**
(21) Application number: 01403365.8
(22) Date of filing: 26.12.2001
(51) Int. Cl.: H04L 12/46, H04L 12/56

(54) **Method for interconnecting a number of RPR rings in a wide area RPR network**

(71) Applicant: ALCATEL, 75008 Paris (FR)
(72) Inventor: Busi, Italo, 20023 Cerro Maggiore (Milano) (IT); Fontana, Michele, 23878 Verderio Superiore (Lecco) (IT); Grandi, Pietro, 20100 Milano (IT); Lometti, Alberto, 23807 Merate (Lecco) (IT)
(74) Representative: Lamoureux, Bernard

(57) **Abstract**

Method for interconnecting a number of RPR rings in a wide area RPR network which provides for creating a hierarchical tree of RPR rings. Communications between different RPR rings in the network are allowed only according to the hierarchical tree architecture, through suitable ring identifiers assigned to the RPR rings according to the hierarchical tree structure (Fig. 2).

## Description

The present invention relates to the field of networks of RPR type (Resilient Packet Ring), and more precisely to a method for interconnecting a number of RPR rings in a wide area RPR network.

Through the IEEE Standardization Institute, in particular with the Standard IEEE 802.17 RPR (Resilient Packet Ring), a new technology is being defined, designed to optimize the use of the bandwidth available for packets transport on ringlet networks, hereunder called RPR networks, in particular in the context of MAN networks (Metropolitan Area Networks), e.g. described ini the article "Resilient Packet Rings for Metro Networks", Global Optical Communication, Pag. 142-146, autori N. Cole, J. Hawkins, M. Green, R. Sharma, K. Vasani, available for public on the Internet site http://www.rpralliance.org/.

The ringlet technology can be based for example either on SDH, Sonet or Ethernet transport physical layers, wherein the RPR networks packets are physically transported.

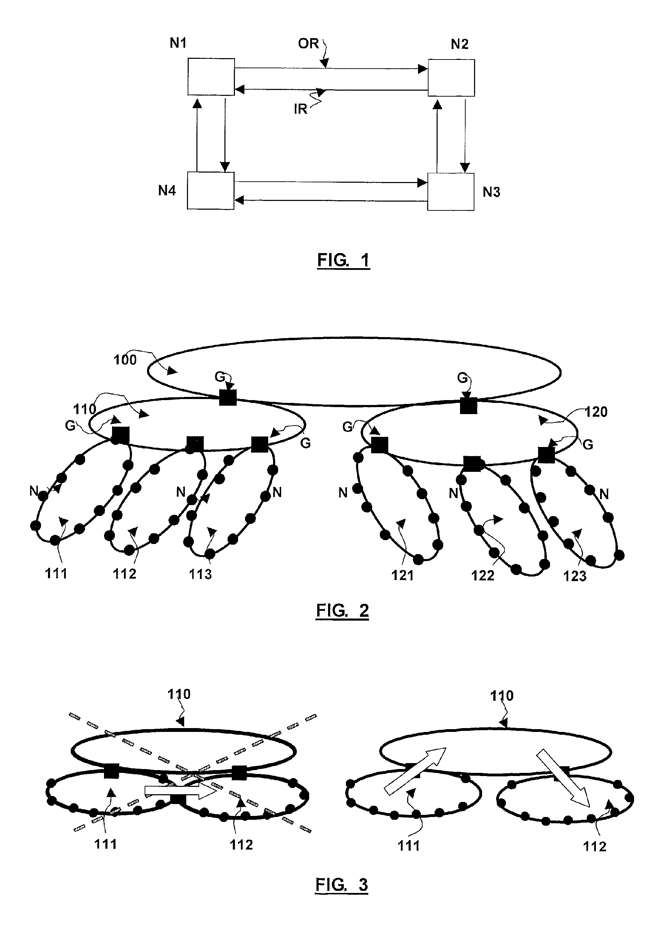

As illustrated in Fig. 1, a known RPR network is based on a configuration of dual counter rotating rings, respectively identified as inner ringlet IR and outer ringlet OR. Both the ringlets are used to carry data and/or control frames of RPR packets between a series of RPR nodes N1, .... N4. As a RPR packet, it is understood a layer-2 frame of the known ISO-OSI or TCP-IP protocol. The RPR control frames packets are fit for developing the so-called known RPR functions of "topology discovery", "protection switching" and "bandwidth management".

Even if RPR has not yet been completely detailed in the Standardization field, it is known that the RPR frame format comprises one part of header and one part of payload. The part of payload contains the upper layer (usually the Client layer) information to be carried. The header, on the contrary, contains at least the following fields:
- ID address of RPR destination station (MAC address);
- ID address of RPR source station;
- protocol type, in order to identify the upper layer information carried in the payload;
- "time to live" TTL, in order to ensure frames do not circulate forever;
- Ringlet ID, in order to indicate the ringlet (outer or inner) over which the frame has been inserted on the ring;
- CoS, in order to identify the class of service for the RPR frame, that is its priority;
- frame type, in order to distinguish between user data RPR frames, RPR control frames or other RPR specific frames.

The IEEE standard known solution covers only the possibility to have a single RPR ring collecting and grooming any client traffic in a given area like a metropolitan area network (MAN).

In the RPR field however, there is the need of providing wider and more powerful network structures connecting a high number of nodes even belonging to different rings and placed far away each other, with the constraint of using only basic RPR ring structures.

Therefore the problem to be solved is how to interconnect different RPR rings in order to create an actual wide area RPR network, for example a metropolitan area RPR network, or even a meshed backbone RPR network.

A first known tentative solution uses external LAN switches to connect two different RPR rings. This solution, based on LAN switches, is not scalable because each LAN switch database contains global information: all the MAC addresses of the network (potentially thousands of entries). The more the network grows, the more information has to be stored. Every decision taken by the LAN switch is based on this global information. In addition, by using LAN switches the efficiency of the feature of spatial reuse in RPR rings is lost, as all the packets passing through bridges loop in the entire ring.

A second known solution uses IP routers to connect two different RPR rings. This solution only allows an end-to-end layer 3 connectivity, while in a MAN scenario a small business company can require to have a layer 2 end-to-end connectivity.

Both known solutions can require an external device that the telecom operator has to buy, has to install in a small and costly space in the central office, and has to manage.

Therefore, the present invention has the aim of eliminating all the above said drawbacks and of indicating a method for interconnecting a number of RPR rings in a wide area RPR network which provides for creating a hierarchical tree of RPR rings. Communications between different RPR rings in the network are allowed only according to the hierarchical tree architecture, through a suitable ring identification.

Another aim of the present invention is to define the format of a modified RPR packet header, to bring the necessary ring identification information for a correct RPR packet routing.

In order to achieve these aims, the subject of the present invention is a method for interconnecting a number of RPR rings in a wide area RPR network as better described in the claims, which are an integrating part of the present description.

The advantages introduced by the present invention with respect to the known solutions are:
- It does not require the installation of any external device in the Central office cabinets. This has two main advantages: space and management (transport operators are not required to manage another different box).
- It is scalable in the sense that it is possible to consider as many RPR rings as wanted due to the fact that it requires the storage of a very small amount of information independent from the network size. This because all decisions are taken only based on local information instead of based on global information that are difficult to be collected and heavy to be processed.
- The service provider is able to give its customers an end-to-end transparent layer 2 service connectivity.

The present invention shall be really clear thanks to the hereinafter detailed description, supplied by way of a non-limiting example as set out in the attached Figures, wherein:
Fig. 1 illustrates a known RPR ring as above described;
Fig. 2 shows an example of a hierarchical tree of RPR rings, according to the invention;
Figs. 3 and 4 show the ways how the RPR packets flow in the network according to the invention;
Fig. 5 shows the structure of the modified RPR packet header according to the invention.
Fig. 6 shows an alternative way of RPR packet flow in the network;
Fig. 7 shows an alternative structure for very wide area RPR networks.

In fig. 2 it is shown a non limiting example of a hierarchical tree of RPR rings 100, ..... 123, according to the invention.

Every RPR ring comprises a number of RPR Nodes N, and is connected to other RPR rings through RPR Gateways G.
- RPR Nodes N have the function of access devices that receive traffic from customers and groom it on an RPR ring, or receive traffic from the ring and forward it to the destination customers.
- RPR Gateways G have the function of connecting two (or even more) RPR rings. It has to be noted that an RPR Gateway can also perform the function of RPR Node.

Communications between different RPR rings in the network are allowed only in a vertical way. With this hypothesis, only hierarchical interactions between RPR rings are allowed.

For example, in fig. 3 if an RPR ring 111 has to communicate with another RPR ring 112 of the same hierarchical level (both RPR rings are sons of the same father 110), the communication will be through the upper layer ring (father 110) and not directly. In general, the communication between two RPR rings will be through the common father.

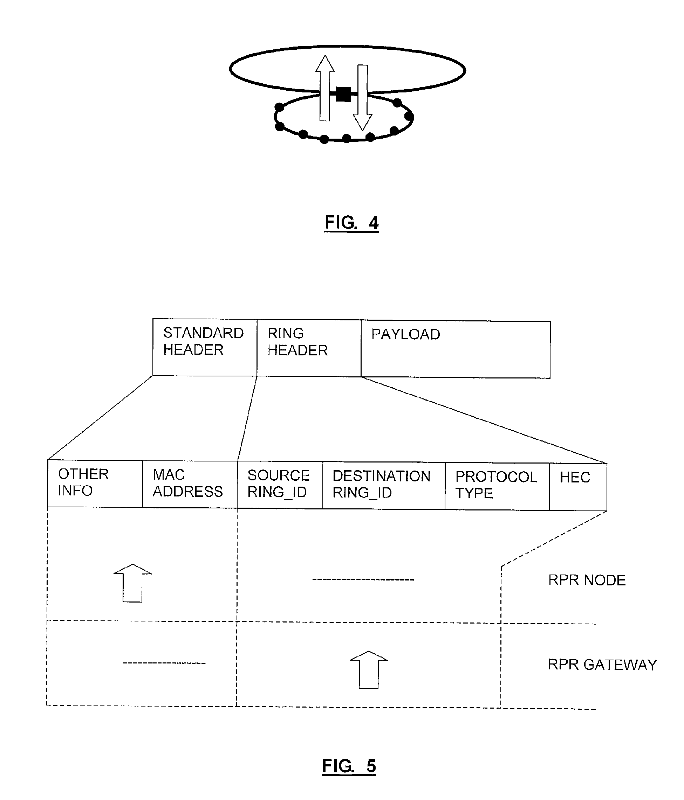

All the RPR ring-to-ring packet traffic forwarding decisions are taken based only on local information stored in the RPR Gateway.
- UP direction: When an RPR packet is not addressed to an RPR Node located on the same RPR ring where it is transiting, the RPR Gateway that intercepts this RPR packet simply forwards it to the upper RPR ring without knowing anything about the final destination (See figure 4). This is a sort of one choice decision, as the RPR Gateway is not required to know where and how far the final destination of the RPR packet is located. The RPR Gateway is only required to know that the RPR packet has to be addressed neither to the RPR ring which it belongs to nor to an RPR ring subtended to its RPR ring, so it simply has to send the RPR packets to its father.
- DOWN direction: when an RPR Gateway detects an RPR packet addressed to an RPR Node located on one of the RPR rings subtended to it, it forwards the RPR packet to the proper RPR ring immediately subtended to it (See figure 4). The forwarding decision is only based on local information because all what the RPR Gateway is required to know is the information related to the subtended RPR rings. The RPR Gateway is not required to store information regarding the rest of the RPR network.

The RPR Gateways behave like a ring selector for the incoming RPR packets. Each RPR ring is addressed by a ring identifier: Ring_ID.

Ring identifiers are assigned to RPR rings in a hierarchical way. In this way two RPR rings which are sons of the same father have the same Ring_ID more significant bits (RING_ID Mask bits identifying the set of father and son rings), and different specific bits (identifying each specific ring).

For example in fig. 2, the hierarchy of RPR rings is: upper level: ring 100; intermediate level: ring 110; lower level: rings 111, 112, 113; or upper level: ring 100; intermediate level: ring 120; lower level: rings 121, 122, 123. The mask bits for the lower set of rings 110, 111, 112, 113 are 11 (two digits); for the lower set of rings 120, 121, 122, 123 the mask bits are 12 (two digits); for the upper set of rings 100, 110, 120 the mask bit is 1 (one digit only).

In the framework of an RPR ring-to-ring network, subject of the invention, two coordinates are required in order to locate the destination point where the RPR packet has to be stripped from the RPR network. They are:
- The destination Ring_ID, assigned in a hierarchical way using Ring_ID masks, as seen above.
- The destination RPR Node, assigned in a known way as Standard (802.17) MAC address.

In a single RPR ring configuration, RPR packet header only foresees the Standard MAC address information to identify a given destination node in the ring. In order to give a Ring-to-Ring interconnectivity, this header needs to be extended with the inclusion of the Ring_ID information as well.

As shown in figure 5, in a known RPR packet format, described above as comprising a Standard HEADER part including the MAC address of the destination RPR node, according to the invention a RING HEADER portion is added in the RPR packet header to insert the following data:
- SOURCE RING_ID: identification of the source ring where the packet has been originated;
- DESTINATION RING_ID: identification of the target ring where the RPR packet has to be addressed;
- PROTOCOL TYPE: identifies the upper layer information carried in the Payload;
- HEC: supplementary field for error correction bits.

In the overall network, for example as shown in fig. 2, every node has a unique MAC address. The procedure for assigning the unique MAC address to each node is known and subject of the IEEE 802.17 RPR standard.

Every ring has a unique RING_ID as well; the procedure for assigning the RING_ID to each ring must keep into account the hierarchical tree structure as explained above.

The insertion of the Ring Header portion in the RPR packets is equivalent to creating a further layer (Ring layer) in the known ISO-OSI stack in between the upper Client layer and the lower RPR layer. Therefore the Protocol Type field in the Standard Header part will identify the Ring layer as an upper layer and then that the Ring layer has been inserted, while the Protocol Type field in the Ring Header part will identify the Client layer as an upper layer.

RPR Nodes and RPR Gateways process the ring-to-ring packets in two different ways.

All RPR Nodes only inspect the RPR MAC ADDRESS field of the incoming packets, with the following logic operations:
If {the packet Standard MAC address matches the RPR Node Standard MAC address}
*Then* the RPR Node strips the packet from the ring
*Else* the packet is sent to the next hop on the ring.

All RPR Gateways only inspect the RING HEADER of the incoming packets, with the following logic operations:
*If* {the Ring_ID Mask of the packet matches the Ring_ID Mask of the ring where the packet is flowing},
*Then* the packet is passed to the next hop in the same ring,
*Else If* {the Ring_ID Mask of the packet matches one of the Ring_ID masks of the RPR Gateway subtended RPR rings},
*Then* the packet is sent to the matched subtended RPR ring (Down direction),
*Else* the packet is forwarded on the upper RPR ring (UP direction).

The above described logic operations of the RPR Nodes and Gateways can be implemented either by hardware or software solutions, at the choice of the skilled in the art.

As said above, an RPR Gateway can also perform the function of an RPR Node, so in the implementation a real RPR Gateway can perform the above logic functions of both RPR Node and Gateway.

Assigning the Ring_IDs in a hierarchical way allows the RPR Gateways only to inspect the Mask of the packet Ring_ID header. The only information that has to be stored in the RPR Gateway database is the Ring_ID Masks of the subtended RPR rings.

The more the hierarchical level of the RPR rings increase, the less the number of bits of the Ring_ID Mask have to be considered by RPR Gateways when inspecting incoming packets, as shown in the example of fig. 2. Due to this fact the classification process gets simpler and simpler when going towards upper hierarchical levels.

As to the constitution of the RPR Nodes and RPR Gateways to carry out the invention, normally the Packet Header is added (in the upstream direction) or taken away (in the downstream direction) in an RPR node. According to the invention, every RPR Node has also to insert (or to take away) the Ring Header part in addition to the known Standard Header part. This can be made with normal circuitry at the reach of the skilled in the art (e.g. the Source RING_ID and the Destination RING_ID are selected by the operator at the connection set-up). The HEC bits are calculated in a known way using a state-of-the-art correction code.

An RPR Gateway behaves like a ring selector for the incoming RPR packets, as explained above. Its constitution can be very similar to that of an RPR Node part carrying out the destination selection for stripping the packet from the ring. In the RPR Gateway, stripping means routing the packet to the upper level ring or to the lower level ring, according to the hierarchical tree structure. The choice is made looking at the Destination RING_ID of the Ring Header instead of the MAC address of the Standard Header. The RPR Gateway is configured by the operator when installed in the network with the mask bits of the subtended rings only. Therefore also the constitution of the RPR Gateway is at the reach of the skilled in the art, once the above explanation is known.

Many changes, modifications, variations and other uses and applications of the subject invention will become apparent to those skilled in the art after considering the specification and the accompanying drawings which disclose preferred embodiments thereof. All such changes, modifications, variations and other uses and applications which do not depart from the spirit and scope of the invention are deemed to be covered by this invention.

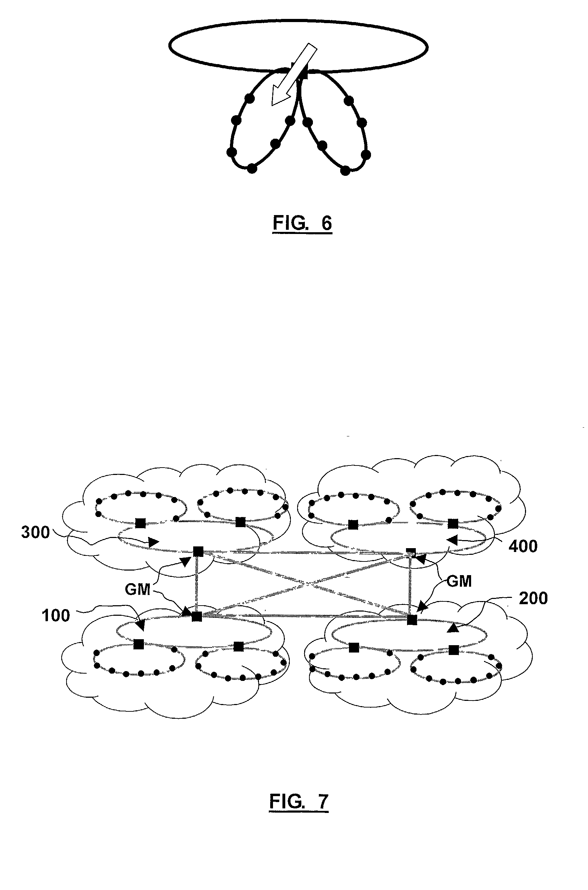

In a first variant, more RPR rings can be subtended to the same RPR Gateway, as shown in figure 6. The difference with respect to the example of figures 3 and 4 is that here in the downstream direction the RPR Gateway can route an incoming packet to one of a number of subtended rings, instead of one subtended ring only.

This is only an available circuit choice when more than two rings are phisically adjacent each other. No changes with respect to the procedure for routing the RPR packets according to the invention. This case is like there were two different RPR gateways, each for a subtended ring.

In a second variant, as an alternative solution in the case of very wide area networks, like WAN (Wide Area Networks) or meshed backbone regional/national networks to be implemented at the RPR level, a partly modified RPR Gateway can be used, hereinafter called RPR MAN Gateway.

In figure 7 it is represented an example of alternative solution for an RPR wide area network in which in the upper hierarchical level the RPR MAN Gateways GM are interconnected through point-to-point links among them instead of an RPR ring.

There are no external devices besides RPR devices, and there are no RPR devices in the core of the wide area network.

Every RPR MAN Gateway subtends a hierarchical tree of RPR Rings like in the non limiting example of fig. 2, (in fig. 7 rings 100, 200, 300, 400 respectively) with any number of hierarchical levels, even one only.

Each RPR MAN Gateway and its subtended RPR rings are identified by a particular value of the RPR Ring_ID Mask as defined above.

The RPR MAN Gateway is therefore an RPR device that receives an RPR packet and according to the information contained in the packet header is able to forward it either on the same RPR ring or toward another RPR MAN Gateway and its subtended hierarchical tree of RPR Rings.

It is not required that all RPR MAN Gateways have to be interconnected as in a complete graph in order to ensure the complete data interconnection.

All the forwarding decisions are taken based only on local information stored in the RPR MAN Gateway. Each RPR MAN Gateway is only required to store the Ring_ID Masks of all other RPR MAN Gateways and their subtended hierarchical tree of RPR Rings. In this way the database of destination addresses is simple and light.

When an RPR MAN Gateway detects an RPR packet, it looks at the Ring_ID Mask. If it is the Ring_ID Mask of the local RPR ring, then the packet is forwarded along the RPR ring toward the next RPR device, otherwise, according to the value of the Ring_ID Mask the packet is forwarded to the proper point-to-point link that leads to the destination hierarchical tree of RPR Rings via the proper RPR MAN Gateway.

As stated above, this point-to-point link can directly lead to the RPR MAN Gateway of the destination hierarchical tree of RPR Rings or can be connected to another RPR MAN Gateway of an intermediate network that will forward the packet toward the RPR MAN Gateway of the final destination. This can happen when the RPR MAN Gateways are not interconnected by a complete graph.

All RPR MAN Gateways only inspect the Ring_ID of the incoming packets, with the following logical operations, very similar to those of the above described RPR Gateways:
*If* {the Ring_ID Mask of the packet matches the Ring_ID Mask of the subtended hierarchical tree of RPR rings}
*Then* the packet is forwarded along the RPR ring toward the next device.
*Else* according to the value of the Ring_ID Mask the packet is forwarded to the proper point-to-point link that directly or indirectly leads to the destination RPR MAN Gateway and its subtended hierarchical tree of RPR Rings.

As to the constitution of the RPR MAN Gateway, it is very similar to the one of a RPR gateway as described above, with the only difference that the RPR MAN Gateway can route an incoming packet to one of a number of other RPR MAN Gateways, instead of one subtended RPR ring.

The RPR Gateway is configured by the operator when installed in the network with the mask bits of the other RPR MAN Gateways and their subtended RPR Rings.

Therefore also the constitution of the RPR MAN Gateway is at the reach of the skilled in the art, once the above explanation is known.

From the above mentioned description, the skilled in the art is able to implement the subject of the invention, without introducing further explanations and by utilizing the standard know-how of the already known RPR technology.

## Claims

1. Method for interconnecting a number of RPR (Resilient Packet Ring) rings in a wide area RPR telecommunication packet network, each ring comprising one or more RPR Nodes, **characterized in that**
it provides for creating a hierarchical tree of RPR rings comprising one or more hierarchical levels of one or more RPR son rings subtended to a respective RPR father ring, whereby packet communications between different RPR rings in the network are allowed only according to the hierarchical tree architecture.

2. Method as in claim 1, **characterised in that** each RPR ring is assigned a unique ring identifier (RING_ID) to allow the packet communication according to said hierarchical tree, composed by:
- a Mask more significant part, for identifying a group of rings in the network, namely a father and all the subtended rings;
- a less significant part for identifying each specific ring of the group;
and **in that** the more the hierarchical level of an RPR ring increases in the hierarchical tree, the less the number of bits of the Ring_ID Mask are used to identify the group of rings.

3. Method as in claim 2, **characterised in that**
- in the direction towards upper hierarchical levels, when an RPR packet is not addressed to an RPR Node located on the same RPR ring where it is transiting, the RPR packet is forwarded to the upper RPR ring without knowing anything about the final destination;
- in the direction towards lower hierarchical levels, when an RPR packet is addressed to an RPR Node located on one of the subtended RPR rings, it is forwarded to the proper RPR ring immediately subtended to it.

4. An RPR packet format to be used for carrying out the method of any preceding claim, comprising one part of header and one part of payload, the part of payload containing the upper layer information to be carried, the header part comprising:
- a Standard Header portion, with information relating to:
- ID address of the RPR destination Node (Standard MAC address);
- other standard information;
- a Ring Header portion, including fields for:
- SOURCE RING_ID: identification of the source ring where the packet has been originated;
- DESTINATION RING_ID: identification of the target ring where the RPR packet has to be addressed, namely said Ring Identifier (RING_ID).

5. An RPR packet format as in claim 4, further comprising in said Ring Header portion fields for:
- PROTOCOL TYPE: identifies the upper layer information carried in the Payload;
- HEC: supplementary field for error correction bits.

6. RPR (Resilient Packet Ring) telecommunications network comprising:
- means for the implementation of the method of any of claims 1 to 3 and using the RPR packet format of claims 4 or 5,
- a number of RPR Rings, each Ring comprising one or more RPR Nodes (N);
- said RPR Nodes (N) having the function of access devices that receive packets from source customers and groom them on their RPR Ring, or receive packets from their ring and forward them to destination customers;
- RPR Gateways (G) having the function of connecting two or more RPR rings, and selecting the Ring toward which to route the incoming RPR packets, by inspection of the said Ring Identifier (Ring_ID).

7. RPR (Resilient Packet Ring) telecommunications network as in claim 6, **characterized in that** said RPR Gateways (G) inspect only said Mask more significant part of the Ring Identifier (Ring_ID) for selecting the Ring.

8. RPR (Resilient Packet Ring) telecommunications network as in claim 6, **characterized in that** said RPR Gateways also perform the function of RPR Node.

9. RPR (Resilient Packet Ring) telecommunications network as in claim 6, **characterized in that** said RPR Nodes comprise means for inserting said header part in the packets from source customers and taking away said header part in the packet to destination customers.

10. RPR (Resilient Packet Ring) telecommunications network as in claim 6, **characterized in that** said RPR Nodes inspect said ID address of the RPR destination Node (MAC address) of the incoming packets, with the following logic operations:
If {the packet Standard MAC address matches the RPR Node Standard MAC address};
*Then* the RPR Node strips the packet from the ring;
*Else* the packet is sent to the next hop on the ring.

11. RPR (Resilient Packet Ring) telecommunications network as in claim 7, **characterized in that** said RPR Gateways inspect the said Mask more significant part of the Ring Identifier (Ring_ID) of the incoming packets, with the following logic operations:
*If* {the Ring_ID Mask of the packet matches the Ring_ID Mask of the ring where the packet is flowing},
*Then* the packet is passed to the next hop in the same ring,
*Else If* {the Ring_ID Mask of the packet matches one of the Ring_ID masks of the RPR Gateway subtended RPR rings},
*Then* the packet is sent to the matched subtended RPR ring (Down direction),
*Else* the packet is forwarded on the upper RPR ring (UP direction).

12. RPR (Resilient Packet Ring) telecommunications network comprising:
- means for the implementation of the method of any of claims 1 to 3 and using the RPR packet format of claims 4 or 5,
- a number of RPR Rings, each Ring comprising one or more RPR Nodes (N);
- said RPR Nodes (N) having the function of access devices that receive packets from source customers and groom them on their RPR Ring, or receive packets from their ring and forward them to destination customers;
- RPR MAN Gateways (GM) having the function of connecting two or more of said hierarchical trees of RPR rings, and selecting the hierarchical tree toward which to route the incoming RPR packets, by inspection of the said Ring Identifier (Ring_ID).

13. RPR (Resilient Packet Ring) telecommunications network as in claim 12,
wherein each of said hierarchical trees of RPR rings may comprise one RPR ring only.

14. RPR (Resilient Packet Ring) telecommunications network as in claim 12, further comprising:
- RPR Gateways (G) having the function of connecting two or more RPR rings in each of said hierarchical trees of RPR rings, and selecting the Ring toward which to route the incoming RPR packets, by inspection of the said Ring Identifier (Ring_ID).

15. RPR (Resilient Packet Ring) telecommunications network as in claim 12, **characterized in that** said RPR MAN Gateways (GM) inspect only said Mask more significant part of the Ring Identifier (Ring_ID) for selecting the hierarchical tree.

16. RPR (Resilient Packet Ring) telecommunications network as in claim 12, **characterized in that** said RPR MAN Gateways also perform the function of RPR Node.

17. RPR (Resilient Packet Ring) telecommunications network as in claim 12, **characterized in that** said RPR MAN Gateways inspect the said Mask more significant part of the Ring Identifier (Ring_ID) of the incoming packets, with the following logic operations:
*If* {the Ring_ID Mask of the packet matches the Ring_ID Mask of the subtended hierarchical tree of RPR rings},
*Then* the packet is passed to the next hop in the same ring of the tree,
*Else If* {the Ring_ID Mask of the packet matches one of the Ring_ID masks of the other RPR MAN Gateways and its subtended hierarchical tree of RPR rings},
*Then* the packet is forwarded to the proper point-to-point link that directly or indirectly leads to the destination RPR MAN Gateway.
